# EUROPÄISCHE PATENTSCHRIFT

(11) **EP 3 297 875 B1**
(45) Veröffentlichungstag und Bekanntmachung des Hinweises auf die Patenterteilung: **03.04.2019**
(21) Anmeldenummer: 16723252.9
(22) Anmeldetag: 18.05.2016
(51) Int. Cl.: B60S 1/16, H02K 21/24, F16H 1/32

(54) **SCHEIBENWISCHERANTRIEB EINER SCHEIBENWISCHERVORRICHTUNG EINES SCHIENENFAHRZEUGS**
WINDSCREEN WIPER DRIVE OF A WINDSCREEN WIPER DEVICE OF A RAIL VEHICLE
ENTRAÎNEMENT D'ESSUIE-GLACE D'UN DISPOSITIF D'ESSUIE-GLACE DE VÉHICULE AUTOMOBILE

(30) Priorität: 19.05.2015 DE 102015006356
(43) Veröffentlichungstag der Anmeldung: 28.03.2018
(73) Patentinhaber: Knorr-Bremse Gesellschaft mit beschränkter Haftung, 2340 Mödling (AT)
(72) Erfinder: DE VRIES, Gerhardus, 2340 Mödling (AT); NOLL, Gerd, 1170 Wien (AT)
(74) Vertreter: Wiedemann, Markus
(86) Internationale Anmeldenummer: PCT/EP2016/000821
(87) Internationale Veröffentlichungsnummer: WO 2016/184566

(56) Entgegenhaltungen:
- EP-A2- 1 403 155
- WO-A1-97/17238
- WO-A2-97/02968
- DE-A1- 19 525 093
- FR-A- 647 006
- US-A1- 2006 053 577

## Beschreibung

Die Erfindung geht aus von einem Scheibenwischerantrieb einer Scheibenwischervorrichtung eines Schienenfahrzeugs, mit wenigstens einem Elektromotor, einem Getriebe, dessen Eingangswelle mit einer Ausgangswelle des Motors verbunden ist, wobei eine Ausgangswelle des Getriebes zum Antreiben wenigstens eines mit dieser hin- und herschwenkenden Scheibenwischerarms eines Scheibenwischers vorgesehen ist, einer Drehwinkelsensoreinrichtung, welche eine Drehung wenigstens eines Elements des Scheibenwischerantriebs erfasst, und einer mechanischen Drehwinkelbegrenzung, welche eine Drehbewegung wenigstens eines Elements des Scheibenwischerantriebs mechanisch begrenzt, gemäß dem Oberbegriff von Anspruch 1.

Weiterhin betrifft die Erfindung auch eine Scheibenwischervorrichtung eines Schienenfahrzeugs beinhaltend wenigstens einen Scheibenwischerantrieb gemäß Anspruch 18 sowie ein Schienenfahrzeug mit einer Scheibenwischervorrichtung gemäß Anspruch 19.

Ein Scheibenwischerantrieb ist aus DE 10 2012 023 638 A1 bekannt. Dort treibt gemäß der Ausführungsform von Figuren 7 bis 9 ein nicht näher bezeichneter Motor eine Schneckenwelle eines Schneckengetriebes, dessen Schneckenrad als Ausgangswelle dient, welche einen Scheibenwischerarm eines Scheibenwischers treibt. Die Drehwinkelsensoreinrichtung ist als Berührungssensorik ausgebildet und weist einerseits an einem Getriebekasten angeordnete Kontaktstifte und andererseits am Schneckenrad eine Leiterstruktur auf, an welcher die Kontaktstifte bei einer Drehung des Schneckenrads entlang gleiten. Die mechanische Drehwinkelbegrenzung weist einen von der Mittelachse des Schneckenrads radial versetzten Bogenbewegungsabschnitt auf, welcher eine bogenförmige Bewegung ausführt, wenn sich das Schneckenrad dreht. Der Bewegungsabschnitt kann sich bei einer Drehung des Schneckenrads innerhalb eines Gleitlochs eines Hebels bewegen, wobei Enden des Gleitlochs Anschläge für den Bewegungsabschnitt derart bilden, dass der Bewegungsabschnitt an den Anschlag des Gleitlochs anschlägt, wenn das Schneckenrad über einen Winkelbereich von 270 Grad hinaus verdreht wird.

Ein gattungsgemäßer Scheibenwischerantrieb wird in WO 97/02968 A2 beschrieben.

Der vorliegenden Erfindung liegt die Aufgabe zugrunde, einen Scheibenwischerantrieb der eingangs erwähnten Art derart weiter zu bilden, dass er bei hoher Dynamik ein hohes Drehmoment bei gleichzeitig geringer Baugröße aufweist.

Diese Aufgabe wird erfindungsgemäß durch die Merkmale von Anspruch 1 gelöst. Vorteilhafte Weiterbildungen der Erfindung sind Gegenstand der beigefügten Unteransprüche.

### Offenbarung der Erfindung

Die Erfindung geht von einem Scheibenwischerantrieb einer Scheibenwischervorrichtung eines Schienenfahrzeugs aus.

Unter einem Schienenfahrzeug ist ein spurgebundenes Fahrzeug zu verstehen, wie eine Lokomotive, ein Triebzug, ein Treibwagen, eine Straßenbahn, ein U-Bahnfahrzeug, ein Waggon wie ein Personen- bzw. Reisezug und/oder Güterwagen, insbesondere ein Hochgeschwindigkeits-Schienenfahrzeug.

Dabei ist vorgesehen, dass der Elektromotor durch einen Scheibenläufermotor und das Getriebe durch ein Planetengetriebe gebildet wird.

Ein solcher Scheibenläufermotor weist in der Regel ein hohes Drehmoment bei geringer Baulänge auf. Bedingt durch den Aufbau eines Scheibenläufermotors weist dieser eine hohe Dynamik auf, welche für rasche Wischbewegungen prädestiniert ist. Aufgrund des in der Regel eisenlosen Rotors tritt kein oder nur geringes Bürstenfeuer auf. Dadurch reduziert sich auch der Bürstenverschleiß auf ein Minimum.

Zudem weisen Planetengetriebe in der Regel einen hohen Wirkungsgrad auf, sind kompakt aufgebaut und sind spielarm oder spielfrei.

Eine solche Ausführung entspricht insbesondere auch den hohen Anforderungen für den Einsatz auf Schienenfahrzeugen hinsichtlich EMV, IP Klasse, Rüttelfestigkeit und Umgebungstemperatur.

Weiterhin ist auch neben einem Einsatz des Scheibenwischerantriebs für einen Scheibenwischer mit lediglich einem Hauptarm auch ein Einsatz für einen Scheibenwischer mit Hauptarm und Neben- oder Parallelwischerarm möglich. Insgesamt ergibt sich eine hohe Lebensdauer durch den Entfall der Heblage und der damit verbundenen axialen Kräfte auf den Scheibenläufermotor.

Erfindungsgemäß weist der Scheibenwischerantrieb ausgangsseitig eine von der Ausgangswelle des Planetengetriebes drehangetriebene Hauptarmwelle sowie eine durch Drehung der Hauptwarmwelle drehangetriebene Neben- oder Parallelarmwelle auf, wobei die Hauptarmwelle zur Befestigung eines Hauptarms und die Neben- oder Parallelarmwelle zur Befestigung eines Neben- oder Parallelarms des Scheibenwischers ausgebildet sind. In einem solchen Fall kann ein Drehwinkelsensor einer Drehwinkelsensoreinrichtung angeordnet und ausgebildet sein, um den Drehwinkel der Neben- oder Parallelarmwelle des Scheibenwischerantriebs zu erfassen.

Durch die in den Unteransprüchen aufgeführten Maßnahmen sind vorteilhafte Weiterbildungen und Verbesserungen der Erfindung möglich.

Besonders bevorzugt weist der Scheibenläufermotor einen eisenlosen, scheibenförmigen Rotor aus einem Isoliermaterial, an dem ein- oder beidseitig Leiterbahnen angeordnet sind, wenigstens einen, einen Stator bildenden Motordeckel, an welchem den Leiterbahnen gegenüberliegende Dauermagnete angeordnet sind, sowie einen Kommutator auf. Der Kommutator weist beispielsweise Bürstenhalter und darin geführte Kohlebürsten auf.

Besonders bevorzugt wird die Ausgangswelle des Scheibenläufermotors durch eine den Rotor tragende Rotorwelle gebildet.

Gemäß einer Weiterbildung bildet der Scheibenläufermotor zusammen mit dem Planetengetriebe eine Baueinheit. Dies kann beispielsweise dadurch realisiert sein, dass der Scheibenläufermotor und das Planetengetriebe ein gemeinsames Gehäuse aufweisen, oder dass ein separates Gehäuse des Scheibenläufermotors direkt an ein separates Gehäuse des Planetengetriebes angeflanscht ist. Hierdurch ergibt sich ein modularer und skalierbarer Aufbau des Scheibenwischerantriebs.

Insbesondere kann die Ausgangswelle des Scheibenläufermotors mit der Eingangswelle des Planetengetriebes direkt verbunden oder ein Zahnrad des Planetengetriebes direkt auf der Ausgangswelle des Scheibenläufermotors angeordnet sein. Hierdurch ergibt sich ein kompakter Aufbau des Scheibenwischerantriebs.

Besonders bevorzugt weist die Ausgangswelle des Planetengetriebes eine Aufnahme zur direkten Montage des Scheibenwischerarms des Scheibenwischers auf. Insbesondere sind keine weiteren mechanischen Übertragungs- oder Kopplungselemente zwischen der Ausgangswelle des Planetengetriebes und dem Scheibenwischerarm vorgesehen.

Hierdurch ergibt sich ein steifer Antriebstrang des Scheibenwischerantriebs, weil der Rotor des Scheibenläufermotors seine Drehbewegung direkt in das Planetengetriebe einleitet, welches diese Drehbewegung beispielsweise unter Reduktion an seine Ausgangswelle überträgt, mit welcher dann der Scheibenwischerarm des Scheibenwischers direkt verbunden ist.

Besonders bevorzugt weist die Drehwinkelsensoreinrichtung wenigstens einen berührungslosen Drehwinkelsensor auf, um die Ist-Position des Scheibenwischerarms zu erkennen. Diese Ist-Position des Scheibenwischerarms kann dann für eine Steuerung oder Regelung der Position des Scheibenwischerarms im Sinne eines Soll-Ist-Abgleichs verwendet werden. Auch kann damit neben den Endlagen des Scheibenwischerarms jede beliebige Zwischenstellung eingestellt bzw. eingeregelt werden.

Durch das bevorzugt analoge Signal des beispielsweise berührungslosen Drehwinkelsensors besteht jederzeit eine zuverlässige Information über die aktuelle Position der Scheibenwischerwelle bzw. des Scheibenwischerarms.

Gemäß einer Weiterbildung weist die Drehwinkelsensoreinrichtung wenigstens einen berührungslosen Magnetfeldsensor auf, welcher mit der Ausgangswelle des Planetengetriebes oder einem mit der Ausgangswelle gekoppelten Drehelement gekoppelt ist.

Dabei ist insbesondere ein Permanentmagnet des berührungslosen Drehwinkelsensors mit einer Welle des Scheibenwischerantriebs drehfest verbunden. Der Drehwinkelsensor kann beispielsweise innerhalb eines Gehäuses des Scheibenläufermotors oder der Baueinheit aus Scheibenläufermotor und Planetengetriebe angeordnet sein und den Drehwinkel der Rotorwelle des Scheibenläufermotors erfassen.

Besonders bevorzugt weist die mechanische Drehwinkelbegrenzung einen von einer Welle des Scheibenwischerantriebs angetriebenen Vorsprung sowie ein stationäres Begrenzungselement mit einer Ausnehmung auf, in welche der Vorsprung hineinragt, wobei Begrenzungsflächen der Ausnehmung Anschlagflächen für den Vorsprung darstellen. Insbesondere kann die mechanische Drehwinkelbegrenzung einstellbar ausgebildet sein, d.h. dass Begrenzungsflächen oder mechanische Anschläge der Drehwinkelbegrenzung in ihrer Lage einstellbar oder veränderbar sind. Alternativ könnten die Begrenzungsflächen oder mechanischen Anschläge auch fest vorgegeben sein.

Dabei ist der Vorsprung vorzugsweise an der Hauptarmwelle des Scheibenwischerantriebs angeordnet und beispielsweise als vorspringende Nase an einem Klemmring ausgebildet, der auf der Hauptarmwelle oder auf der Nebenarm- oder Parallelarmwelle befestigt ist.

Besonders bevorzugt ist eine elektrische oder elektronische Steuereinrichtung zur Steuerung des Scheibenläufermotors in Abhängigkeit von Signalen der Drehwinkelsensoreinrichtung vorgesehen. Gemäß einer Weiterbildung kann diese elektrische oder elektronische Steuereinrichtung für einen 4-Quadrantenbetrieb des Scheibenläufermotors ausgebildet sein. Damit ist eine flexible Einstellung der Wischerarmstellung möglich.

Bevorzugt kann das Planetengetriebe die Drehzahl des Scheibenläufermotors untersetzend ausgebildet sein, wodurch das ohnehin hohe Drehmoment des Scheibenläufermotors weiter erhöht wird.

Die Erfindung betrifft auch eine Scheibenwischervorrichtung beinhaltend einen Scheibenwischerantrieb wie oben beschrieben sowie ein Schienenfahrzeug mit einer solchen Scheibenwischervorrichtung.

### Zeichnung

Die Erfindung wird nachstehend anhand von Ausführungsbeispielen unter Bezugnahme auf die beigefügte Zeichnung näher beschrieben. Es zeigen:
- Fig. 1: eine perspektivische Ansicht eines Scheibenläufermotors in einem demontierten Zustand wie in einem Scheibenwischerantrieb gemäß einer bevorzugten Ausführungsform der Erfindung verwendet wird;
- Fig.2: einen teilweisen Längsschnitt durch einen Scheibenwischerantrieb gemäß einer ersten Ausführungsform der Erfindung;
- Fig.3: einen teilweisen Längsschnitt durch einen Scheibenwischerantrieb gemäß einer weiteren Ausführungsform der Erfindung;
- Fig.4: eine Querschnittsdarstellung entlang der Linie IV-IV von Fig.3, in welcher insbesondere eine mechanische Drehwinkelbegrenzung sichtbar ist.

### Beschreibung der Ausführungsbeispiele

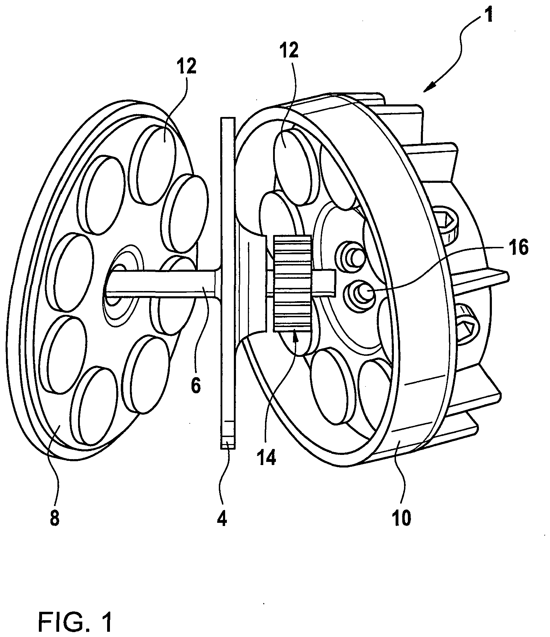

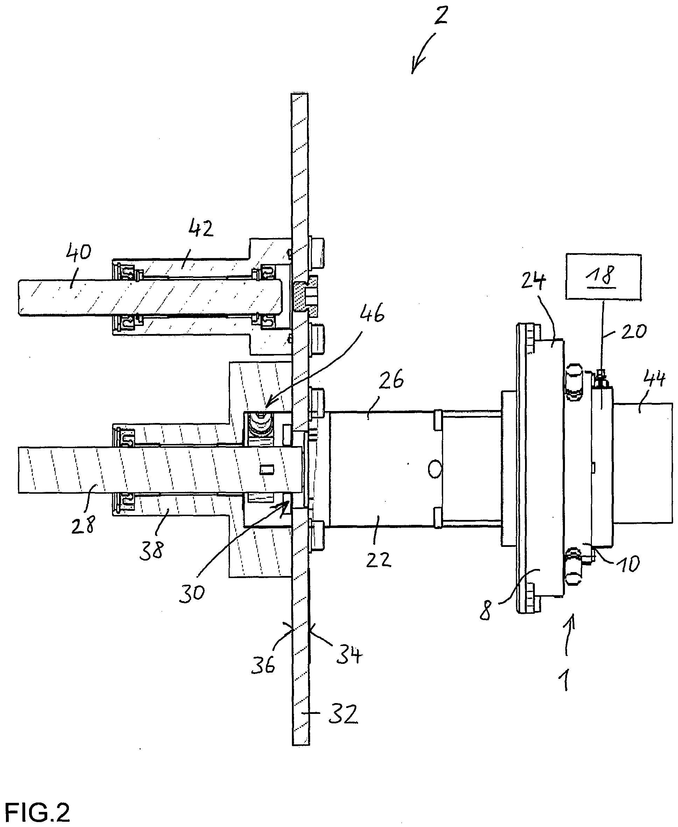

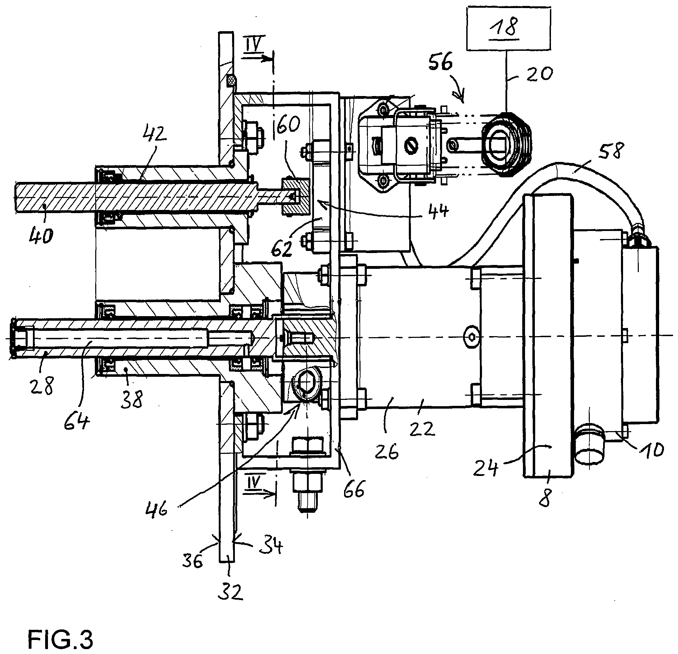

Der in Fig. 1 gezeigte bevorzugte Ausführungsform eines elektrischen Scheibenläufermotors 1 wird in einem in Figuren 2 und 3 gezeigten Ausführungsformen von Scheibenwischerantrieben 2 jeweils als einziger Antrieb verwendet.

Besonders bevorzugt weist der Scheibenläufermotor 1, der nach dem Prinzip einer Unipolarmaschine arbeitet, einen eisenlosen, scheibenförmigen Rotor 4 aus einem Isoliermaterial auf, an dem beispielsweise beidseitig Leiterbahnen z.B. aus Kupferfolie angeordnet sind. Der Rotor 4 ist auf einer Rotorwelle 6 drehfest angeordnet, welche in den Motordeckeln 8, 10 drehbar gelagert ist, wobei ein Ende der Rotorwelle 6, welche insofern eine Ausgangswelle des Scheibenläufermotors 1 bildet, durch eine zentrale Öffnung eines Motordeckels 8 ragt. An den einen Stator bildenden Motordeckeln 8, 10 sind jeweils den Leiterbahnen des Rotors 4 gegenüberliegende Dauermagnete 12 angeordnet, beispielsweise mit kreisförmigem Querschnitt. Die Dauermagnete 12 können übliche Dauermagneten oder auch Neobdyn-Magneten sein. Letztere haben ein stärkeres magnetisches Feld und damit bei gleich bleibendem Rotorstrom ein höheres Drehmoment. Weiterhin ist ein Kommutator 14 vorhanden, welcher Bürstenhalter und darin geführte Kohlebürsten 16 aufweist. Der Rotor 4 dreht demnach in einem homogenen Dauermagnetfeld, wobei die Motorspannung über eine an elektrischen Anschlüssen angeschlossene Zuleitung 20 an die Kohlebürsten 16 angelegt und über den Kommutator 14 direkt dem Rotor 4 zugeführt wird. Der magnetische Rückschluss für den Scheibenläufermotor 1 wird dann durch die Motordeckel 8, 10 gebildet. Ein solcher Scheibenläufermotor 1 hat in Richtung seiner Rotorachse gesehen eine geringe Erstreckung und kann daher sehr flach bauen.

Der Scheibenläufermotor 1 wird von einer in Figuren 2 und 3 gezeigten elektronischen Steuereinrichtung 18 gesteuert, welche zu diesem Zweck über die Zuleitung 20 an den Scheibenläufermotor 1 angeschlossen ist. Die Steuereinrichtung 18 ist insbesondere für einen 4-Quadrantenbetrieb des Scheibenläufermotors 1 ausgebildet.

Fig.2 zeigt einen teilweisen Längsschnitt durch einen Scheibenwischerantrieb 2 gemäß einer bevorzugten Ausführungsform der Erfindung. Der Scheibenwischerantrieb 2 weist neben dem in Fig.1 gezeigten Scheibenläufermotor 1 ein mit diesem bevorzugt in einer Baueinheit verbautes Planetengetriebe 22 auf. Dabei sind beispielsweise ein Gehäuse 24 des Scheibenläufermotors 1, umfassend die beiden Motordeckel 8, 10 und ein Gehäuse 26 des Planetengetriebes 22 axial, d.h. in Richtung der Rotorwelle 6 des Scheibenläufermotors 1 gesehen aneinander geflanscht. Das Ende der Rotorwelle 6 ist mit einer Eingangswelle des Planetengetriebes 22 drehfest verbunden, wobei diese Verbindung hier nicht sichtbar ist. Alternativ kann auch ein Zahnrad des Planetengetriebes 22 direkt auf der aus dem Gehäuse 24 ragenden Ausgangswelle bzw. Rotorwelle 6 des Scheibenläufermotors 1 angeordnet sein. Eine Ausgangswelle 28 des Planetengetriebes 22 ragt durch eine Durchgangsöffnung 30 einer Tragwand 32 hindurch, an deren erster Seitenfläche 34 auch die Baueinheit aus Scheibenläufermotor 1 und Planetengetriebe 22 befestigt ist. Insofern erstreckt sich die Ausgangswelle 28 des Planetengetriebes auch über die von der ersten Seitenfläche 34 weg weisende zweite Seitenfläche 36 der Tragwand 32 axial hinaus und bildet mit ihrer axialen Verlängerung eine Hauptarmwelle des Scheibenwischerantriebs 2. Diese Hauptarmwelle 28 ist außer im Planetengetriebe 22 jenseits der Tragwand 32 mittels eines hier beispielsweise an der zweiten Seitenfläche 36 fest gelegten Lagerflansches 38 zumindest radial gelagert. Am freien Ende der Hauptarmwelle 28 ist eine Aufnahme für einen Hauptarm des Scheibenwischers ausgebildet, beispielsweise als Fläche für eine Klemmung. Folglich besteht der Antriebsstrang für die Hauptarmwelle 28 einzig aus der Rotorwelle 6, der Eingangswelle des Planetengetriebes 22, der jeweiligen Räderpaarungen innerhalb des Planetengetriebes 22 sowie der Ausgangswelle 28 des Planetengetriebes, welche gleichzeitig die Hauptarmwelle 28 bildet. Durch die geringe Anzahl von Bauelementen wird der Antriebsstrang sehr steif, was auch eine hohe Dynamik des Scheibenwischerantriebs 2 bedingt. Die Tragwand 32 kann Teil einer beliebigen Struktur im Bereich einer Windschutzscheibe des Schienenfahrzeugs sein. Während die zweite Seitenfläche 36 der Tragwand 32 nach außen, d.h. in die Umgebung weist, weist die erste Seitenfläche 34 nach innen.

Parallel zur Hauptarmwelle 28 kann eine Neben- oder Parallelarmwelle 40 für einen Neben- oder Parallelarm des Scheibenwischers vorhanden sein. Diese Neben- oder Parallelarmwelle 40 ist in einem weiteren, beispielsweise an der zweiten Seitenfläche 36 der Tragwand 32 fest gelegten Lagerflansch 42 axial und radial gelagert. Diese Neben- oder Parallelarmwelle 40 weist an ihrem freien Ende eine Aufnahme für den Neben- oder Parallelarm des Scheibenwischers auf, beispielsweise ebenfalls in Form einer Fläche für eine Klemmung. Die Neben- oder Parallelarmwelle 40 ist selbst antriebslos und wird über den auf der Hauptarmwelle 28 und der Neben- oder Parallelarmwelle 40 befestigten Scheibenwischer von der Hauptarmwelle 28 in bekannter Weise indirekt drehangetrieben. Gemäß einer alternativen Ausführungsform kann auch auf eine Neben- oder Parallelarmwelle 40 verzichtet werden. Dann weist der Scheibenwischer lediglich einen Hauptarm und der Scheibenwischerantrieb 2 lediglich eine Hauptarmwelle 28 auf, an welcher der Hauptarm befestigt und von dieser drehangetrieben wird. Die bedingt durch die Ansteuerung des Scheibenläufermotors 1 initiierte Hin- und Herbewegung des Scheibenwischers erfolgt dann in einer Ebene senkrecht zur Hauptarmwelle 28 bzw. zur Neben- oder Parallelarmwelle 40.

Der Scheibenwischerantrieb 2 verfügt weiterhin über eine Drehwinkelsensoreinrichtung 44, welcher hier beispielsweise durch einen berührungslosen Drehwinkelsensor in Form eines Magnetfeldsensors gebildet wird. Ein Rotor dieses Magnetfeldsensors ist hier beispielsweise auf der Rotorwelle 6 des Scheibenläufermotors 1 endseitig angeordnet, beispielsweise in Form eines Permanentmagneten. Ein Stator des Magnetfeldsensors 44, beispielsweise in Form einer elektrischen Spule ist beispielsweise an dem das Ende der Rotorwelle 6 lagernden Motordeckel 10 befestigt. Durch Drehung der Rotorwelle 6 ändert sich das magnetische Feld, was von einer im Magnetfeldsensor integrierten Auswertelektronik erfasst wird, wobei dann ein entsprechendes elektrisches Signal über eine hier nicht gezeigte Signalleitung an die elektronische Steuereinrichtung 18 geliefert wird. Dieses elektrische Signal repräsentiert dann die Winkelstellung der Rotorwelle 6, welche über das bekannte Untersetzungsverhältnis des Planetengetriebes 22 in die Winkelstellung der Hauptarmwelle 28 umgerechnet und damit die aktuelle Ist-Drehposition des Scheibenwischers ermittelt werden kann. Diese Ist-Drehposition des Scheibenwischers bzw. eine Ist-Drehgeschwindigkeit des Scheibenwischers kann dann von der elektronischen Steuereinrichtung 18, welcher beispielsweise ein über eine Bedieneinrichtung eingegebener Wert für eine Soll-Drehposition, Soll-Drehendposition und/oder eine Soll-Drehgeschwindigkeit des Scheibenwischers vorliegt, an die Sollwerte angepasst werden. Anstatt einer solchen Regelung kann jedoch auch lediglich eine Steuerung des Scheibenläufermotors 1 in Bezug auf ein Erzielen von bestimmten Drehpositionen, Drehendpositionen und/oder Drehwinkelgeschwindigkeiten ohne Regelung vorgesehen sein, wobei auch in diesem Fall eine Rückkopplung der entsprechenden, über die Drehwinkelsensoreinrichtung 44 gelieferten Ist-Werte sinnvoll ist.

Besonders bevorzugt weist die in Fig.2 gezeigte bevorzugte Ausführungsform eine mechanische Drehwinkelbegrenzung 46 für die Hauptarmwelle 28 auf, um den Winkelbereich, den der Scheibenwischer überstreicht, auf einen maximal möglichen Winkelbereich zu beschränken, auch für den Fall, dass z.B. die elektronische Steuerung 18 versagt. Die Drehwinkelbegrenzung 46 ist hier beispielsweise auf der von der Baueinheit aus Scheibenläufermotor 1 und Planetengetriebe 22 abgewandten Seite der Tragwand 32 angeordnet.

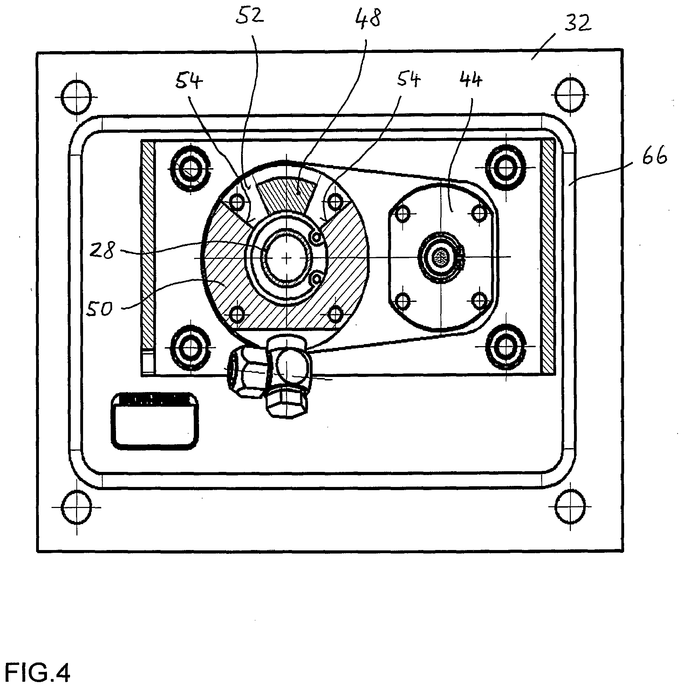

Die mechanische Drehwinkelbegrenzung 46, wie sie bei der Ausführungsform von Fig.2 eingesetzt wird, ist analog zu der in der Ausführungsform von Fig.3 verwendeten Drehwinkelbegrenzung ausgeführt, so dass zur Erläuterung hier auch auf Fig.4 zurückgegriffen werden kann, welche die Drehwinkelbegrenzung 46 des Ausführungsbeispiels von Fig.3 im Querschnitt zeigt.

Die Drehwinkelbegrenzung 46 weist einen hier von der Hauptarmwelle 28 angetriebenen Vorsprung 48 auf, beispielsweise in Form einer in Bezug auf die Mittelachse der Hauptarmwelle radial versetzt angeordneten und axial vorspringenden Nase eines auf der Hauptarmwelle geklemmten Klemmrings. Weiterhin weist die Drehwinkelbegrenzung ein stationäres Begrenzungselement 50 mit einer Ausnehmung 52 auf, in welche der Vorsprung 48 hineinragt, wobei Begrenzungsflächen 54 der Ausnehmung 52 Anschlagflächen für den Vorsprung 48 darstellen.

Hier wird das stationäre Begrenzungselement 50 beispielsweise durch eine direkt oder indirekt an der Tragwand festgelegte Lochplatte gebildet, in welcher eine von der Mittelachse der Hauptarmwelle 28 versetzt angeordnetes kreissektorförmiges Loch 52 ausgebildet ist, in welches die Nase 48 bezogen auf die Mittelachse der Hauptarmwelle 28 axial hineinragt. Die Nase 48 selbst ist dabei ebenfalls kreissektorförmig ausgebildet, um an seitliche Begrenzungsflächen 54 des Lochs 52 bündig anschlagen zu können. Die Lochplatte 50 kann an der Tragwand 32 lösbar befestigt sein, um sie gegen eine andere Lochplatte mit verändertem Lochmaßen und Begrenzungsflächen austauschen zu können, um die durch den Scheibenwischer bestrichene Winkelfläche zu verändern. Insofern ist die mechanische Drehwinkelbegrenzung 46 hier zwar vorgegeben, aber durch Austausch der Lochplatte 50 dennoch einstellbar.

Alternativ könnte die mechanische Drehwinkelbegrenzung 46 auch einstellbar in dem Sinne ausgebildet sein, d.h. dass die Begrenzungsflächen 54 oder mechanische Anschläge der Drehwinkelbegrenzung in ihrer Lage einstellbar oder veränderbar sind, ohne dass hierzu Teile ausgetauscht werden müssten.

Die in Fig.2 dargestellte Ausführungsform ist wegen der Drehwinkelerfassung auf der Rotorwelle 6 des Scheibenläufermotors 1 und der dadurch etwas größeren axialen Erstreckung vor allem zum Einbau in Schienenfahrzeuge geeignet, bei welchen die Einbautiefe für den Scheibenwischerantrieb weniger beschränkt ist wie beispielsweise LRV-Fahrzeuge (Straßenbahnen).

Bei der in Fig.3 gezeigten weiteren Ausführungsform eines Scheibenwischerantriebs 2 sind in Bezug zu der in Fig.2 gezeigten Ausführungsform identische und gleich wirkende Bauteile und Baugruppen mit den gleichen Bezugszahlen gekennzeichnet. Im Unterschied zur Ausführungsform von Fig.2 ist bei der Ausführungsform von Fig.3 ein zentraler elektrischer Anschluss 56 für den Scheibenwischerantrieb 2 zu sehen, welcher mit dem Scheibenläufermotor 1 über eine Leitung 58 verbunden ist. Weiterhin ist die Drehwinkelsensoreinrichtung 44 hier auch beispielsweise in Form eines berührungslosen Magnetfeldsensors hier nicht an der Rotorwelle 6 sondern an der Neben- oder Parallelarmwelle 40 angeordnet. Genauer dreht ein Rotor des Magnetfeldsensors 44, z.B. in Form eines Permanentmagneten 60, mit der Neben- oder Parallelarmwelle 40, während der zugeordnete Stator in einem stationären Sensorgehäuse 62 angeordnet ist. Es versteht sich, dass auch hier der Magnetfeldsensor 44 über eine hier nicht gezeigte Signalleitung mit dem zentralen elektrischen Anschluss 56 verbunden ist. Der zentrale elektrische Anschluss 56 verfügt beispielsweise über einen Teil einer elektrischen Steckverbindung in Form einer Buchse, an welche dann ein Stecker einer Zuleitung 20 angeschlossen ist, die mit der elektronischen Steuerung 18 verbunden ist. Damit wird vom Magnetfeldsensor 44 die Drehlage der Neben- oder Parallelarmwelle 40 an die elektronische Steuereinrichtung 18 gemeldet.

Weiterhin ist die Drehwinkelbegrenzung 46 hier beispielsweise auf der der Baueinheit aus Scheibenläufermotor 1 und Planetengetriebe 22 zugewandten ersten Seitenfläche 34 der Tragwand 32 angeordnet. Auch sind die beiden Lagerflansche 38, 42 für die Hauptarmwelle 28 bzw. die Nebenarmwelle 40 an der ersten Seitenfläche 34 der Tragwand 32 unter Durchragen von Durchgangsbohrungen festgelegt. Darüber hinaus weist die Hauptarmwelle 28 eine zentrale Bohrung 64 auf, die als Waschwasserzuführung für Waschwasser dient, welches aus einer Ausbringeinrichtung z.B. in Form von Düsen auf die Windschutzscheibe aufgetragen wird. Schließlich ist die Baueinheit aus Scheibenläufermotor 1 und Planetengetriebe 22 an einem Gehäuse 66 befestigt, welches wiederum an der ersten Seitenfläche 34 der Tragwand 32 festgelegt ist. In diesem Gehäuse 66 sind auch die Drehwinkelbegrenzung 46 und der Drehwinkelsensor 44 untergebracht.

Die in Fig.3 dargestellte Ausführungsform in wegen ihrer geringen axialen Erstreckung aufgrund der Drehwinkelerfassung auf der Neben- oder Parallelarmwelle 40 vor allem zum Einbau in Schienenfahrzeuge geeignet, bei welchen die Einbautiefe für den Scheibenwischerantrieb beschränkt ist wie beispielsweise EMU- (**EMU** = Electrical Multiple Unit) oder DMU- (**DMU** = Diesel Multiple Unit) Fahrzeuge.

Der vorgeschlagene Scheibenwischerantrieb 2 für Schienenfahrzeuge, wie er an der Tragwand 32 als dort im ganzen montier- und demontierbare Einheit befestigt ist, besteht daher im Wesentlichen aus dem Scheibenläufermotor 1, dem Planetengetriebe 22, der Drehwinkelsensoreinrichtung 44 und der mechanischen Drehwinkelbegrenzung 46. An diesen Scheibenläufermotor 1 ist das Planetengetriebe 22 direkt angesetzt und bildet mit diesem zusammen bevorzugt eine Baueinheit. Die elektronische Steuereinrichtung 18 ist hier bevorzugt nicht Bestandteil des Scheibenwischerantriebs 2, könnte aber ebenfalls Teil von diesem sein.

Das Planetengetriebe 22 hat in der Anwendung für den Einsatz auf Straßenbahnen (LRV) oder auch anderen Fahrzeugen mit geringer Geschwindigkeit bevorzugt eine verlängerte Ausgangswelle 28, auf die direkt der Scheibenwischerarm montiert werden kann.

Die Drehwinkelsensoreinrichtung 44 zeichnet sich durch ein bevorzugt analoges Ausgangssignal aus, das in direktem Zusammenhang mit der aktuellen Drehstellung des Scheibenwischerarms bzw. der Stellung der Ausgangswelle 28 des Planetengetriebes steht. Als Ausgangssignal wird ein Normstromsignal von 4-20 mA verwendet, da dieses sich durch sehr hohe EMV Festigkeit auszeichnet.

Der Scheibenwischerantrieb 2 ist sowohl für Segmentwischerarme als auch für Parallelwischerarme geeignet und ermöglicht einen Wischwinkel beispielsweise zwischen ca. 30° und 180°.

Im Rahmen der Erfindung sind auch Ausführungen enthalten, welche beliebige Kombination von Merkmalen der hier beschriebenen Ausführungsformen enthalten.

### Bezugszeichenliste

- 1: Scheibenläufermotor
- 2: Scheibenwischerantrieb
- 4: Rotor
- 6: Rotorwelle
- 8: Motordeckel
- 10: Motordeckel
- 12: Dauermagnete
- 14: Kommutator
- 16: Kohlebürsten
- 18: Steuereinrichtung
- 20: Zuleitung
- 22: Planetengetriebe
- 24: Gehäuse
- 26: Gehäuse
- 28: Ausgangswelle
- 30: Durchgangsöffnung
- 32: Tragwand
- 34: erste Seitenfläche
- 36: zweite Seitenfläche
- 38: Lagerflansch
- 40: Neben- oder Parallelarmwelle
- 42: Lagerflansch
- 44: Drehwinkelsensoreinrichtung
- 46: Drehwinkelbegrenzung
- 48: Nase
- 50: Begrenzungselement
- 52: Ausnehmung
- 54: Begrenzungsflächen
- 56: zentraler Anschluss
- 58: Leitung
- 60: Permanentmagnet
- 62: Sensorgehäuse
- 64: Bohrung
- 66: Gehäuse

## Patentansprüche

1. Scheibenwischerantrieb (2) einer Scheibenwischervorrichtung eines Schienenfahrzeugs, mit
a) wenigstens einem Elektromotor (1),
b) einem Getriebe (22), dessen Eingangswelle mit einer Ausgangswelle (6) des Elektromotors (1) verbunden ist, wobei eine Ausgangswelle (28) des Getriebes (22) zum Antreiben wenigstens eines mit dieser hin- und herschwenkenden Scheibenwischerarms eines Scheibenwischers vorgesehen ist,
c) einer Drehwinkelsensoreinrichtung (44), welche eine Drehung wenigstens eines Elements (6; 40) des Scheibenwischerantriebs (2) erfasst,
d) einer mechanischen Drehwinkelbegrenzung (46), welche eine Drehbewegung wenigstens eines Elements (28) des Scheibenwischerantriebs (2) mechanisch begrenzt, wobei
e) der Elektromotor (1) durch einen Scheibenläufermotor und das Getriebe (22) durch ein Planetengetriebe gebildet wird, **dadurch gekennzeichnet, dass** der Scheibenwischerantrieb ausgangsseitig eine von der Ausgangswelle (28) des Planetengetriebes (22) drehangetriebene Hauptarmwelle (28) sowie eine durch Drehung der Hauptwarmwelle (28) drehangetriebene Neben- oder Parallelarmwelle (40) aufweist, wobei die Hauptarmwelle (28) zur Befestigung eines Hauptarms und die Neben- oder Parallelarmwelle (40) zur Befestigung eines Neben- oder Parallelarms des Scheibenwischers ausgebildet sind.

2. Scheibenwischerantrieb nach Anspruch 1, **dadurch gekennzeichnet, dass** der Scheibenläufermotor (1) einen eisenlosen, scheibenförmigen Rotor (4) aus einem Isoliermaterial, an dem ein- oder beidseitig Leiterbahnen angeordnet sind, wenigstens einen, einen Stator bildenden Motordeckel (8, 10), an welchem den Leiterbahnen gegenüberliegende Dauermagnete (12) angeordnet sind, sowie einen Kommutator (14) aufweist.

3. Scheibenwischerantrieb nach Anspruch 2, **dadurch gekennzeichnet, dass** die Ausgangswelle des Scheibenläufermotors (1) durch eine den Rotor (4) tragende Rotorwelle (6) gebildet wird.

4. Scheibenwischerantrieb nach einem der vorhergehenden Ansprüche, **dadurch gekennzeichnet, dass** der Scheibenläufermotor (1) zusammen mit dem Planetengetriebe (22) eine Baueinheit bildet.

5. Scheibenwischerantrieb nach Anspruch 4, **dadurch gekennzeichnet, dass** die Ausgangswelle des Scheibenläufermotors (1) mit der Eingangswelle des Planetengetriebes (22) direkt verbunden oder ein Zahnrad des Planetengetriebes auf der Ausgangswelle des Scheibenläufermotors (1) angeordnet ist.

6. Scheibenwischerantrieb nach einem der vorhergehenden Ansprüche, **dadurch gekennzeichnet, dass** die Ausgangswelle (28) des Planetengetriebes eine Aufnahme zur direkten Montage des Scheibenwischerarms des Scheibenwischers aufweist.

7. Scheibenwischerantrieb nach einem der vorhergehenden Ansprüche, **dadurch gekennzeichnet, dass** die Drehwinkelsensoreinrichtung (44) wenigstens einen berührungslosen Drehwinkelsensor aufweist.

8. Scheibenwischerantrieb nach Anspruch 7, **dadurch gekennzeichnet, dass** die Drehwinkelsensoreinrichtung (44) wenigstens einen berührungslosen Magnetfeldsensor aufweist, welcher mit der Ausgangswelle (28) des Planetengetriebes oder einem mit der Ausgangswelle (28) gekoppelten Drehelement gekoppelt ist.

9. Scheibenwischerantrieb nach Anspruch 8, **dadurch gekennzeichnet, dass** ein Permanentmagnet (60) des berührungslosen Magnetfeldsensors (44) mit einer Welle (6; 40) des Scheibenwischerantriebs (2) drehfest verbunden ist.

10. Scheibenwischerantrieb nach einem der Ansprüche 7 bis 9, **dadurch gekennzeichnet, dass** die Drehwinkelsensoreinrichtung (44) innerhalb eines Gehäuses (24) des Scheibenläufermotors (1) angeordnet ist und den Drehwinkel der Rotorwelle (6) des Scheibenläufermotors (1) erfasst.

11. Scheibenwischerantrieb einem der Ansprüche 7 bis 9, **dadurch gekennzeichnet, dass** die Drehwinkelsensoreinrichtung (44) den Drehwinkel der Neben- oder Parallelarmwelle (40) des Scheibenwischerantriebs (2) erfasst.

12. Scheibenwischerantrieb nach einem der vorhergehenden Ansprüche, **dadurch gekennzeichnet, dass** die mechanische Drehwinkelbegrenzung (46) einen von einer Welle (28) des Scheibenwischerantriebs (2) angetriebenen Vorsprung (48) sowie ein stationäres Begrenzungselement (50) mit einer Ausnehmung (52) aufweist, in welche der Vorsprung (48) hineinragt, wobei Begrenzungsflächen (54) der Ausnehmung (52) Anschlagflächen für den Vorsprung (48) darstellen.

13. Scheibenwischerantrieb nach Anspruch 12, **dadurch gekennzeichnet, dass** der Vorsprung (48) an der Hauptarmwelle (28) des Scheibenwischerantriebs (2) angeordnet ist.

14. Scheibenwischerantrieb nach einem der vorhergehenden Ansprüche, **dadurch gekennzeichnet, dass** der Kommutator (14) des Scheibenläufermotors (1) Bürstenhalter und darin geführte Kohlebürsten (16) aufweist.

15. Scheibenwischerantrieb nach einem der vorhergehenden Ansprüche, **dadurch gekennzeichnet, dass** das Planetengetriebe (22) die Drehzahl des Scheibenläufermotors (1) untersetzend ausgebildet ist.

16. Scheibenwischerantrieb nach einem der vorhergehenden Ansprüche, **dadurch gekennzeichnet, dass** eine elektrische oder elektronische Steuereinrichtung (18) zur Steuerung des Scheibenläufermotors (1) in Abhängigkeit von Signalen der Drehwinkelsensoreinrichtung (44) vorgesehen ist.

17. Scheibenwischerantrieb nach Anspruch 16, **dadurch gekennzeichnet, dass** die elektrische oder elektronische Steuereinrichtung (18) für einen 4-Quadrantenbetrieb des Scheibenläufermotors ausgebildet ist.

18. Scheibenwischervorrichtung eines Schienenfahrzeugs beinhaltend wenigstens einen Scheibenwischerantrieb (2) gemäß wenigstens einem der vorhergehenden Ansprüche, wobei der Scheibenwischerantrieb (2) Segmentwischerarme oder Parallelwischerarme antreibt.

19. Schienenfahrzeug mit einer Scheibenwischervorrichtung nach Anspruch 18.

## Claims

1. Windscreen wiper drive (2) of a windscreen wiper apparatus of a rail vehicle, comprising
a) at least one electric motor (1),
b) a gearing (22), the input shaft of which is connected to an output shaft (6) of the electric motor (1), wherein an output shaft (28) of the gearing (22) is provided for driving at least one windscreen wiper arm, which pivots back and forth with said output shaft, of a windscreen wiper,
c) a rotational angle sensor device (44) which detects a rotation of at least one element (6; 40) of the windscreen wiper drive (2),
d) a mechanical rotational angle delimiter (46) which mechanically limits a rotational movement of at least one element (28) of the windscreen wiper drive (2), wherein
e) the electric motor (1) is represented by a disc armature motor, and the gearing (22) is represented by a planetary gearing, **characterised in that** the windscreen wiper drive has on the output side a main arm shaft (28) driven to rotate by the output shaft (28) of the planetary gearing (22) and a secondary or parallel arm shaft (40) driven to rotate by the rotation of the main arm shaft (28), wherein the main arm shaft (28) is designed for securing a main arm and the secondary or parallel arm shaft (40) is designed for securing a secondary or parallel arm of the windscreen wiper.

2. Windscreen wiper drive according to claim 1, **characterised in that** the disc armature motor (1) has an ironless, disc-shaped rotor (4), which is composed of an insulating material and on one side or both sides of which there are arranged conductor tracks, at least one motor cover (8, 10), which forms a stator and on which there are arranged permanent magnets (12) which are situated opposite the conductor tracks, and a commutator (14).

3. Windscreen wiper drive according to claim 2, **characterised in that** the output shaft of the disc armature motor (1) is represented by a rotor shaft (6) which bears the rotor (4).

4. Windscreen wiper drive according to any of the preceding claims, **characterised in that** the disc armature motor (1) forms a structural unit together with the planetary gearing (22).

5. Windscreen wiper drive according to claim 4, **characterised in that** the output shaft of the disc armature motor (1) is directly connected to the input shaft of the planetary gearing (22), or **in that** a gear of the planetary gearing is arranged on the output shaft of the disc armature motor (1).

6. Windscreen wiper drive according to any of the preceding claims, **characterised in that** the output shaft (28) of the planetary gearing has a receptacle for the direct mounting of the windscreen wiper arm of the windscreen wiper.

7. Windscreen wiper drive according to any of the preceding claims, **characterised in that** the rotational angle sensor device (44) has at least one contactless rotational angle sensor.

8. Windscreen wiper drive according to claim 7, **characterised in that** the rotational angle sensor device (44) has at least one contactless magnetic field sensor which is coupled to the output shaft (28) of the planetary gearing or to a rotary element which is coupled to the output shaft (28).

9. Windscreen wiper drive according to claim 8, **characterised in that** a permanent magnet (60) of the contactless magnetic field sensor (44) is connected non-rotatably to a shaft (6; 40) of the windscreen wiper drive (2).

10. Windscreen wiper drive according to any of claims 7 to 9, **characterised in that** the rotational angle sensor device (44) is arranged within a housing (24) of the disc armature motor (1) and detects the rotational angle of the rotor shaft (6) of the disc armature motor (1).

11. Windscreen wiper drive according to any of claims 7 to 9, **characterised in that** the rotational angle sensor device (44) detects the rotational angle of the secondary or parallel arm shaft (40) of the windscreen wiper drive (2).

12. Windscreen wiper drive according to any of the preceding claims, **characterised in that** the mechanical rotational angle delimiter (46) has a projection (48), which is driven by a shaft (28) of the windscreen wiper drive (2), and a static delimiting element (50), which has a recess (52) into which the projection (48) projects, wherein delimiting surfaces (54) of the recess (52) constitute stop surfaces for the projection (48).

13. Windscreen wiper drive according to claim 12, **characterised in that** the projection (48) is located on the main arm shaft (28) of the windscreen wiper drive (2).

14. Windscreen wiper drive according to any of the preceding claims, **characterised in that** the commutator (14) of the disc armature motor (1) has brush holders and carbon brushes (16) guided therein.

15. Windscreen wiper drive according to any of the preceding claims, **characterised in that** the planetary gearing (22) is designed to reduce the rotational speed of the disc armature motor (1).

16. Windscreen wiper drive according to any of the preceding claims, **characterised in that** an electric or electronic control device (18) is provided for controlling the disc armature motor (1) in a manner dependent on signals of the rotational angle sensor device (44).

17. Windscreen wiper drive according to claim 16, **characterised in that** the electric or electronic control device (18) is designed for 4-quadrant operation of the disc armature motor.

18. Windscreen wiper apparatus of a rail vehicle, comprising at least one windscreen wiper drive (2) according to one or more of the preceding claims, wherein the windscreen wiper drive (2) drives segment wiper arms or parallel wiper arms.

19. Rail vehicle having a windscreen wiper apparatus according to claim 18.

## Revendications

1. Entraînement (2) d'essuie-glace d'un dispositif d'essuie-glace d'un véhicule automobile, comprenant
a) au moins un moteur (1) électrique,
b) une transmission (22), dont l'arbre d'entrée est relié à l'arbre (6) de sortie du moteur (1) électrique, un arbre (28) de sortie de la transmission (22) étant prévu pour l'entraînement d'au moins un bras allant et venant d'un essuie-glace,
c) un dispositif (44) de capteur d'angle de rotation, qui détecte une rotation d'au moins un élément (6 ; 40) de l'entraînement (2) de l'essuie-glace,
d) une limitation (46) mécanique de l'angle de rotation, qui limite mécaniquement un mouvement de rotation d'au moins un élément (28) de l'entraînement (2) de l'essuie-glace, dans lequel
e) le moteur (1) électrique est formé par un moteur à induit en disque et la transmission (22) par un train épicycloïdal, **caractérisé en ce que** l'entraînement de l'essuie-glace a, du côté de la sortie, un arbre (28) de bras principal, entraîné en rotation par l'arbre (28) de sortie du train (22) épicycloïdal, ainsi qu'un arbre (40) de bras secondaire ou parallèle, entraîné en rotation par une rotation de l'arbre (28) de bras principal, l'arbre (28) de bras principal étant constitué pour fixer un bras principal et l'arbre (40) de bras auxiliaire ou parallèle pour fixer un bras auxiliaire ou parallèle de l'essuie-glace.

2. Entraînement d'essuie-glace suivant la revendication 1, **caractérisé en ce que** le moteur (1) à induit en disque a un rotor (4) sans fer en forme de disque en un matériau isolant, sur lequel sont disposées, d'un côté ou des deux côtés, des pistes conductrices, un couvercle (8, 10) de moteur formant un stator sur lequel sont disposés des aimants (12) permanents opposés aux pistes conductrices, ainsi qu'un commutateur (14).

3. Entraînement d'essuie-glace suivant la revendication 2, **caractérisé en ce que** l'arbre de sortie du moteur (1) à induit en disque est formé par un arbre (6) de rotor portant le rotor (4).

4. Entraînement d'essuie-glace suivant l'une des revendications précédentes, **caractérisé en ce que** le moteur (1) à induit en disque forme, ensemble avec l'entraînement (22) épicycloïdal, une unité de construction.

5. Entraînement d'essuie-glace suivant la revendication 4, **caractérisé en ce que** l'arbre de sortie du moteur (1) à induit en disque est relié directement à l'arbre d'entrée de l'entraînement (22) épicycloïdal ou une roue dentée de l'entraînement épicycloïdal est montée sur l'arbre de sortie du moteur (1) à induit en disque.

6. Entraînement d'essuie-glace suivant l'une des revendications précédentes, **caractérisé en ce que** l'arbre (28) de sortie de l'entraînement épicycloïdal a un logement pour le montage direct du bras de l'essuie-glace.

7. Entraînement d'essuie-glace suivant l'une des revendications précédentes, **caractérisé en ce que** le dispositif (44) de capteur d'angle de rotation a au moins un capteur d'angle de rotation sans contact.

8. Entraînement d'essuie-glace suivant la revendication 7, **caractérisé en ce que** le dispositif (44) de capteur d'angle de rotation a au moins un capteur de champ magnétique sans contact, qui est adjoint à l'arbre (28) de sortie de l'entraînement épicycloïdal ou à un élément tournant adjoint à l'arbre (28) de sortie.

9. Entraînement d'essuie-glace suivant la revendication 8, **caractérisé en ce qu'**un élément (60) permanent du capteur (44) de champ magnétique sans contact est solidaire en rotation d'un arbre (6 ; 40) de l'entraînement (2) de l'essuie-glace.

10. Entraînement d'essuie-glace suivant l'une des revendications 7 à 9, **caractérisé en ce que** le dispositif (44) de capteur d'angle de rotation est disposé à l'intérieur d'un carter (24) du moteur (1) à induit en disque et détecte l'angle de rotation de l'arbre (6) de rotor du moteur (1) à induit en disque.

11. Entraînement d'essuie-glace suivant l'une des revendications 7 à 9, **caractérisé en ce que** le dispositif (44) de détecteur d'angle de rotation détecte un angle de rotation de l'arbre (40) de bras auxiliaire ou parallèle de l'entraînement (2) de l'essuie-glace.

12. Entraînement d'essuie-glace suivant l'une des revendications précédentes, **caractérisé en ce que** la limitation (46) mécanique d'angle de rotation a une saillie (48) entraînée par un arbre (28) de l'entraînement (2) de l'essuie-glace, ainsi qu'un élément (50) de limitation fixe ayant un évidement (52), dans lequel pénètre la saillie (48), des surfaces (54) de délimitation de l'évidement (52) représentant les surfaces de butée pour la saillie (48).

13. Entraînement d'essuie-glace suivant la revendication (12), **caractérisé en ce que** la saillie (48) est disposée sur l'arbre (28) du bras principal de l'entraînement (2) de l'essuie-glace.

14. Entraînement d'essuie-glace suivant l'une des revendications précédentes, **caractérisé en ce que** le commutateur (14) du moteur (1) à induit en disque a un porte-balai et des balais (16) de charbon, qui y sont guidés.

15. Entraînement d'essuie-glace suivant l'une des revendications précédentes, **caractérisé en ce que** le train (22) épicycloïdal est constitué pour démultiplier la vitesse de rotation du moteur (1) à induit en disque.

16. Entraînement d'essuie-glace suivant l'une des revendications précédentes, **caractérisé en ce qu'**un dispositif (18) électrique ou électronique de commande est prévu pour commander le moteur (1) à induit en disque, en fonction de signaux du dispositif (44) de capteur d'angle de rotation.

17. Entraînement d'essuie-glace suivant la revendication 16, **caractérisé en ce que** le dispositif (18) électrique ou électronique de commande est constitué pour un fonctionnement à 4 quadrants du moteur à induit en disque.

18. Dispositif d'essuie-glace d'un véhicule ferroviaire, comportant au moins un entraînement (2) d'essuie-glace suivant au moins l'une des revendications précédentes, l'entraînement (2) de l'essuie-glace entraînant des bras de segment d'essuie-glace ou des bras parallèles d'essuie-glace.

19. Véhicule ferroviaire, comprenant un dispositif d'essuie-glace suivant la revendication 18.
